Europäisches Patentamt

(19) European Patent Office

Office européen des brevets

(11) **EP 0 700 143 A2**

(12) **EUROPEAN PATENT APPLICATION**

(43) Date of publication:
06.03.1996 Bulletin 1996/10

(51) Int. Cl.⁶: **H02K 3/14**

(21) Application number: 95202131.9

(22) Date of filing: 03.08.1995

(84) Designated Contracting States:
DE FR GB

(30) Priority: 02.09.1994 US 299978

(71) Applicant: **GENERAL MOTORS CORPORATION**
**Detroit Michigan 48202 (US)**

(72) Inventors:
• **El-Antably, Ahmed Mostafa**
**Indianapolis, Indiana 46240 (US)**

• **Dasher, Randall Eugene**
**Daleville, Indiana 47334 (US)**

(74) Representative: **Denton, Michael John et al**
**Patent Section**
**1st Floor**
**Gideon House**
**28 Chapel Street**
**Luton Bedfordshire LU1 2SE (GB)**

(54) **Alternating current machine winding**

(57) A polyphase, multi-pole A/C winding has coil groups (A1,B3,C1) occupying only bottom layer positions of a slotted ferromagnetic structure, coil groups (A2,B4,C4) occupying only top layer positions of the structure and coil groups (A3,A4,B1,B2,C2,C3) characterized by one side thereof occupying only one of the top or bottom layer positions and the other side thereof having some of the individual coils occupying one of the top or bottom layer positions with the remaining individual coils occupying the other of the top or bottom layer positions. The winding pattern is advantageously utilized for fully automating dynamoelectric machine windings having efficiencies approaching those of conventional full lapped windings.

FIG. 2

**Description**

This invention relates to winding patterns on dynamoelectric machines. More specifically, improvements to lap winding patterns in alternating current machines are disclosed which provide for automated manufacturing.

High efficiency motors and generators are known that have full lap distributed windings. Because such a winding pattern requires alternating layer placement of the two sides of a coil set, the full lap winding is limited to manual manufacturing methods. Manual winding of electric machines is prohibitively expensive for mass production. Therefore, concentric windings are generally used in such machinery in order to allow for automated winding. However, efficiency of these machines suffers as a result of using the less efficient concentric windings.

In applications where very high motor efficiency and low cost production methods are required, alternate winding patterns are needed. The emerging areas of electric and hybrid electric automobiles require such low cost and highly efficient motors.

In accordance with one aspect of the present invention, a winding pattern has efficiencies approaching those achieved with full lap windings. In accordance with another aspect of the invention, the winding pattern allows for automated winding using conventional winding and insertion tooling. The winding pattern of the present invention is equally applicable to rotors and stators, and has utility with any number of phases and poles.

An alternating current machine winding in accordance with the present invention is characterised by the features specified in claim 2 wherein a ferromagnetic structure such as a conventional rotor or stator has a plurality of slots for supporting therein a bottom and top layer of a coil. A first number of coil sets are laid in the bottom positions of respective slots thereby resulting in both coil sides of all coils occupying the same layer position. A second number of coil sets are laid in respective slots such that all coils on one side of each coil set occupy the same layer position and a portion of the coils on the other side of the coil set occupy the other layer position. The remaining coils not occupying the same layer will occupy the other layer thereby resulting in a coil set that has one side thereof distributed between the two layer positions. Depending upon the exact configuration of the machine, a portion of the second number of coil sets may have one side thereof occupying one layer position and the other side thereof occupying the other layer position such as is found in conventional full lap winding patterns. Similar to the coil sets wholly in the bottom layer positions, a third number of coil sets are laid in the top positions of respective slots thereby resulting in both coil sides of all coils in the coil sets occupying the same layer position.

The present invention will now be described, by way of example, with reference to the accompanying drawings, in which:

Figure 1 illustrates a sectional view through a stator and a preferred winding pattern for a three phase, four pole machine in accordance with the present invention;

Figure 2 illustrates schematically the winding pattern illustrated in Figure 1;

Figure 3 illustrates a sectional view through a stator and a preferred winding pattern for a three phase, eight pole machine in accordance with the present invention;

Figure 4 illustrates a sectional view through a stator and a preferred winding pattern for a three phase, two pole machine in accordance with the present invention;

Figure 5 illustrates a sectional view through a stator and a preferred winding pattern for a four phase, eight pole machine in accordance with the present invention;

Figures 6A-6D illustrate coil set insertion phases for the preferred winding pattern for a three phase, four pole machine as illustrated in Figure 1; and

Figure 7 is a graphical illustration comparing respective output power and output torque of a full lap wound motor and a motor wound in accordance with the present invention.

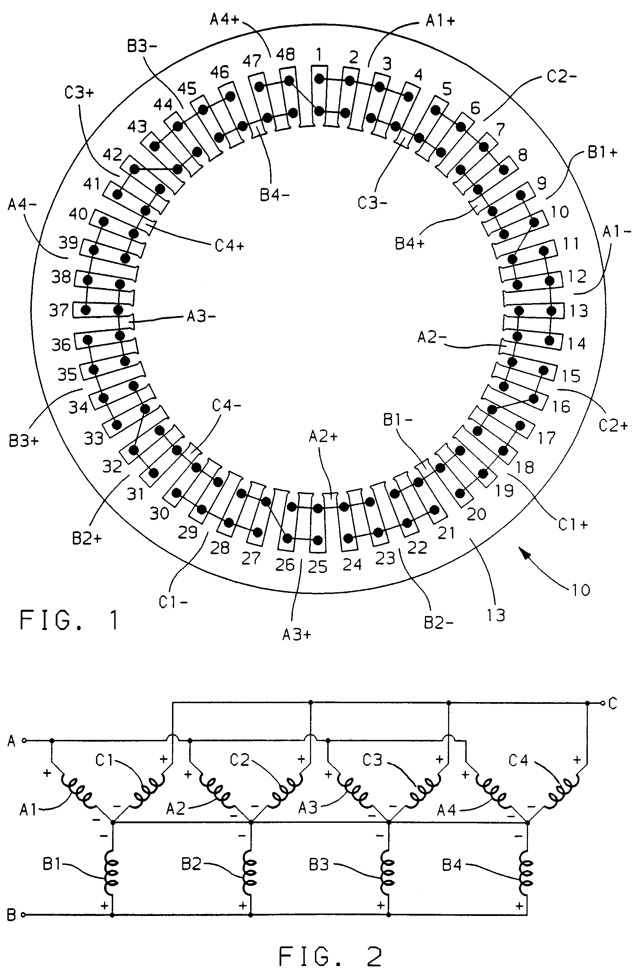

Referring first to Figure 1, a preferred winding pattern for a three phase, four pole alternating current machine is shown. In the present illustration, the winding pattern is shown occupying the slots of a stator structure 10 although it is to be understood that, while the description herein is provided with reference to stator structures, windings associated with rotor structures are within the purview of the present invention. Stator structure 10 is typically formed from laminations of a ferromagnetic material 13 with a non-conductive material therebetween each lamination to reduce the effects of eddy currents through the structure induced by alternating currents in the coils supported thereby. The view of the stator shown in Figure 1 is cross-sectional therethrough. Slots in the stator structure are labeled 1 through 48 adjacent each slot around the periphery of the stator structure. There are 12 coil sets in total for the present three phase, four pole machine; or, four coil sets per each of the three phases. The coil sets are designated by two character alpha-numeric symbols, the first character thereof designating which of the three phases the coil set corresponds to A, B, or C, and the second character thereof designating the coil set 1-4. This. concept is also illustrated with reference to Figure 2 which shows four coil sets each having three phase inputs A, B and C. Figure 2 also labels each coil set with a (+) designating the phase input A, B or C common to each coil set for each respective phase and a (-) designating the common node between and among all coil sets regardless of phase. It is the (+) and (-) designation that is also carried over to Figure 1 which serves to designate the relative current direction in a respective coil set winding. For example, if coil set A1 has current flowing into the page at the side designated A1+ then the side designated A1- exhibits current flowing out of the page and vice-versa. The individual coils on any side of a coil set are also illustrated, in the cross-sectional views, with a solid line joining the coils. For example, in Figure 1, the individual coils in slots 1-4 comprise one side of the coil set A1.

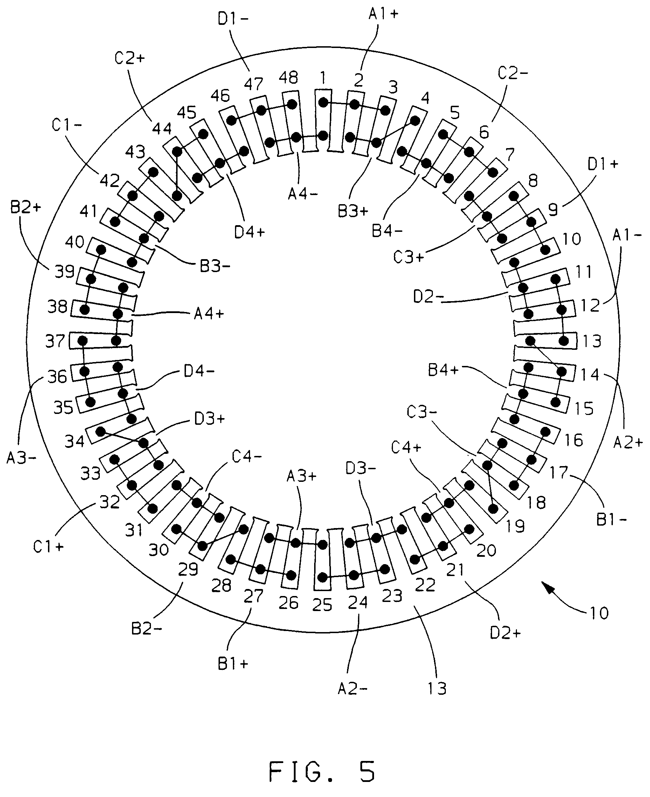

As described above, the bottom layer positions of stator slots 1 through 4 are occupied by one side of all individual coils making up one side of the coil set A1. The other side of the individual coils making up the other side of the coil set A1 are likewise in the bottom layer position of stator slots 11 through 14. This is described herein as a flat coil set in as much as all coils occupy the same layer position of respective slots. Each coil set comprises a distributed coil set; that is to say the sides of the individual coils of a coil set are spread out to occupy several adjacent stator slot positions. Referring briefly to Figure 5A, a view of the various coil sets as if the stator structure were opened up and laid out flat is shown. The numerical designations correspond to the slot number in the stator. For example, coil set A1 can be seen having one side of all individual coils making up one side of the coil set occupying slots 1 through 4. Likewise, the other side of all individual coils making up the other side of the coil set occupies slots 11 through 14.

In the present embodiment in a three phase, four pole alternating current machine, the number of slots per pole equals 12. The coil span, or the slot pitch between the two sides of an individual coil is equal to ten. Therefore, the present embodiment is a fractional pitch winding with a 5/6 pitch, i.e. 10/12=5/6. This is a preferred arrangement for reasons well known in the art including that the resultant electromotive force induced in the winding and the magnetomotive force produced by the winding is distributed closer sinusoidally and has greatly reduced harmonic content from that of a full pitch winding. The geometric nature of a fractional pitch winding is such that the number of slots between the innermost coils of any coil set is a fractional multiple of the number of individual coils making up a coil set. For example with respect to coil set A1, the number of slots between the two innermost coils thereof is equal to 6 which is a fractional multiple of the number of individual coils in a coil set (i.e. 4x1.5). Therefore, where coil sets occupy the same layer position for both sides of all of its coils, eventually a fractional (with respect to the number of individual coils in a coil set) number of unoccupied layer positions will result. Heretofore, opposite coil sides of all coil sets have been fully lapped such that similar sides of different coil sets are placed in one of the layer positions and the opposite' sides are placed in the other of the layer positions. These type of coil sets have been referred to in the art as lapped coil sets.

The present invention utilizes a plurality of flat coil sets disposed in the bottom layer position of the stator slots. The number of coil sets which may be positioned thusly is dependent upon the number of phases in the machine, the number of poles and the coil pitch. In the present preferred three phase, four pole machine it can be seen in Figure 1 that three flat coil sets A1, C1 and B3 occupy bottom layer positions of the stator slots. It follows then that these three coil sets are, as a group, first to be wound and inserted into the respective stator slots. The first inserted coil sets are also illustrated in Figure 6A which demonstratively shows coil placement relative to the slots as if the stator slots were laid out flat and viewed radially outward from the vantage point of the geometric center of the stator structure. For clarity, only certain of the stator slots are numbered.

Advantageously, though not of necessity, conventional automated winding tooling is employed to reduce the time and cost associated with producing machines having the winding pattern according to the present invention. Where automated winding is employed, the winding process begins by winding the individual coils comprising the coil sets on a conventional shed flyer winder. Each individual coil may be wound from one or more turns of the wire and in the present embodiment a four turn coil is utilized. Once an individual coil is wound on the shed flyer winder, it is then transferred to a set of fingers on a transfer tool. The transfer tool is indexed one slot position and a next individual coil of the coil set is wound and transferred to another set of fingers. The steps are repeated until the individual coils in the coil set are completed. The coil groups in the first winding and insertion phase are all wound and placed on the transfer tooling in this manner. In the present preferred winding pattern, three coil sets are wound and placed on the transfer tool in this first phase.

The transfer tool is next removed from the winder and placed on a coil insertion machine. The fingers of the transfer tool are aligned with the blades of an insertion tool and the coil sets are transferred thereto. The stator is placed on the insertion tool loading fixture such that the slots are aligned for accepting the coil sets therein. The loading fixture allows the stator to be indexed for subsequent insertion phases. As the coil sets are inserted into the respective slots, insulative wedges are also placed therein in a well known manner to isolate phases and layers.

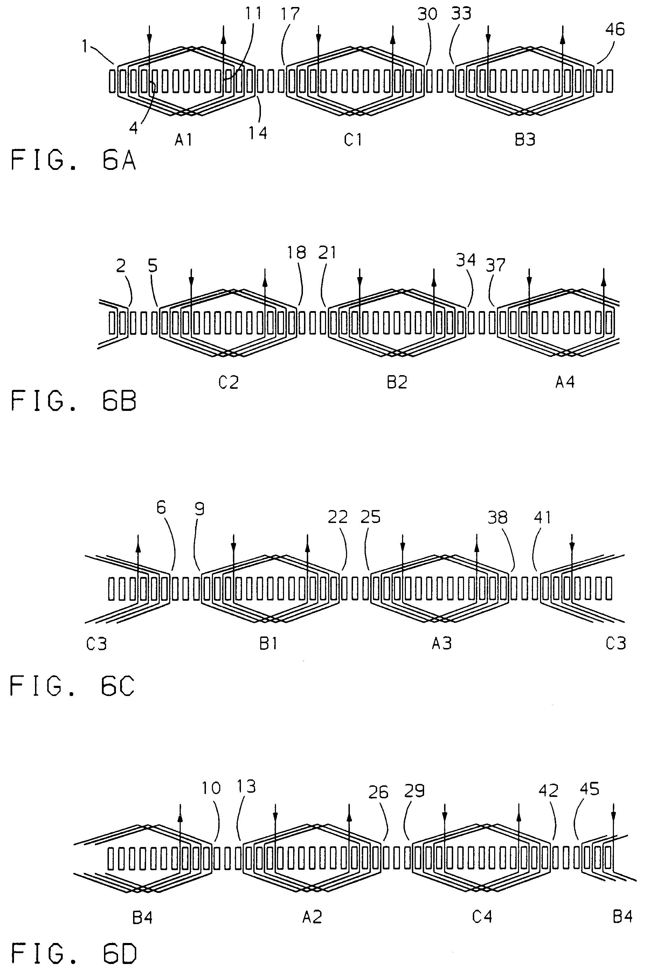

In addition and contrast to the plurality of flat coil sets just described, it can be seen in Figure 1 that each of the six coil sets C2, B2, A4, B1, A3 and C3 is characterized by all individual coils on one side of the respective coil set occupying either the bottom or top layer positions of the stator slots with the remaining individual coils on the other side of the respective coil set being split between the bottom and top layer positions of the stator slots. These coil sets are designated kinked coils herein. These kinked coils differ from prior art coil sets of conventional lap winding topology in that one of the sides thereof occupies both bottom and top slot positions. Three of the six kinked coil sets, those designated C2, B2 and A4 are characterized by one complete side thereof occupying the bottom layer position of the respective stator slots. Logically then it follows that coil sets C2, B2 and A4 are, as a group, second to be wound and inserted into the respective stator slots. This second inserted set of coils is also illustrated in Figure 6B. Again, only certain of the slots are labeled for clarity.

Where automated winding is employed, the winding process for coil sets C2, B2 and A4 is performed as previously described above with reference to the first three coil sets. The stator, having been indexed from the previous insertion phase is positioned to accept the second three coil sets. In this insertion phase, however, it is noted that the two outermost individual coils of one of the sides of each coil set will lap two outermost individual coils of one of the sides of each coil set previously inserted and occupying the bottom layer position of common stator slots. The remaining individual coils of each coil set are drifted to occupy the bottom layer position of the respective stator slots.

The remaining three of the six kinked coil sets, those designated B1, A3 and C3 are characterized by one complete side thereof occupying the top layer position of the respective stator slots. Coil sets B1, A3 and C3 are therefore the third coil sets to be wound and inserted into the respective stator slots. The third inserted set of coils is also illustrated in Figure 6C.

Where automated winding is employed, the winding process for coil sets B1, A3 and C3 is performed as previously described. The stator, having been indexed from the previous insertion phase is positioned to accept the third three coil sets. In this insertion phase, however, it is noted that the two outermost individual coils of one of the sides of each coil set will occupy the bottom layer position of the stator between previously inserted and bottom layer position occupying coils. The remaining individual coils of each of these three coil sets occupies the top layer position of the respective stator slots.

The final three coil sets, those designated B4, A2 and C4 are characterized by all individual coils on both sides of each coil set occupying the top layer position of the respective stator slots. These coil sets are of course the fourth and final coil sets to be wound and inserted into the respective stator slots. The fourth inserted set of coils is also illustrated in Figure 6D.

As before, where automated winding is employed, the winding process for coil sets B4, A2 and C4 is performed as previously described. The stator, having been indexed from the previous insertion phase is positioned to accept the final three coil sets in the top layer positions of the respective slots. After this final insertion phase, the stator moves on to conventional blocking and lacing operations well known to those skilled in the art.

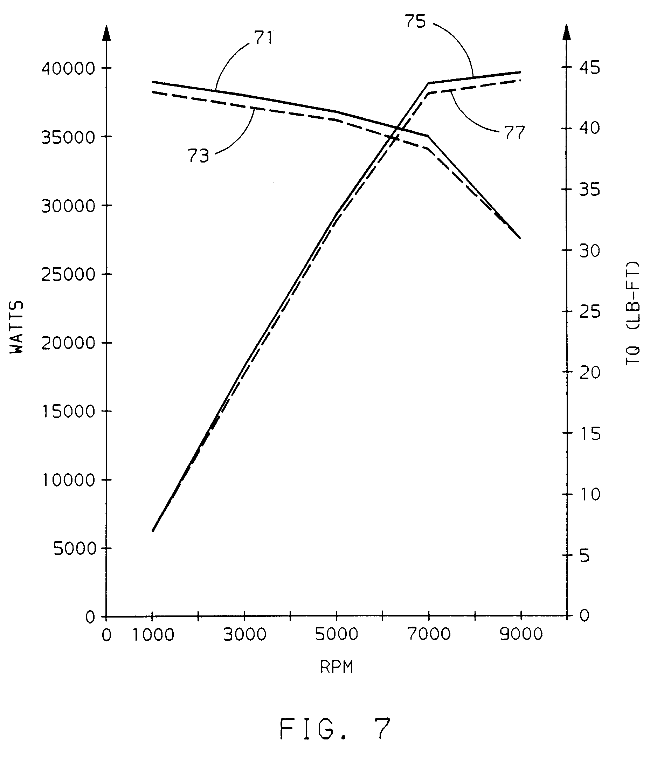

The winding pattern of the present invention when compared to a conventional full lap winding pattern exhibits the same slot placement of the individual coils in the coil sets with respect to circumferential position but exhibits different radial positioning (i.e. bottom and top layer positioning). Figure 7 illustrates a comparison of peak output power and output torque characteristics for a conventional full lap winding motor versus that for a motor wound with the present inventive pattern. The solid lines represents data for a conventional full lap wound motor and the broken line represent data for an equivalent phase and pole motor wound with the present inventive motor winding pattern. Curve 71 and 73 are torque output curves read against the right hand legend, while curves 75 and 77 are peak power output curves read against the left hand legend. Maximum deviation of the output and torque of the kinked winding motor across the full range of motor operation (from approximately 1000 RPM to 9000 RPM) is approximately only 0.8%, and the average motor efficiency reduction from that of a conventional full lap wound machine is approximately only 0.5%.

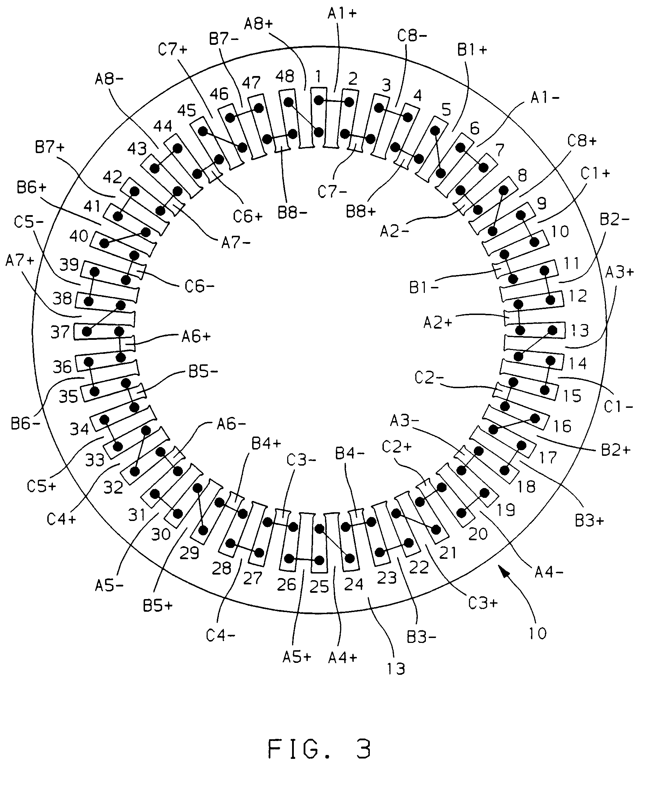

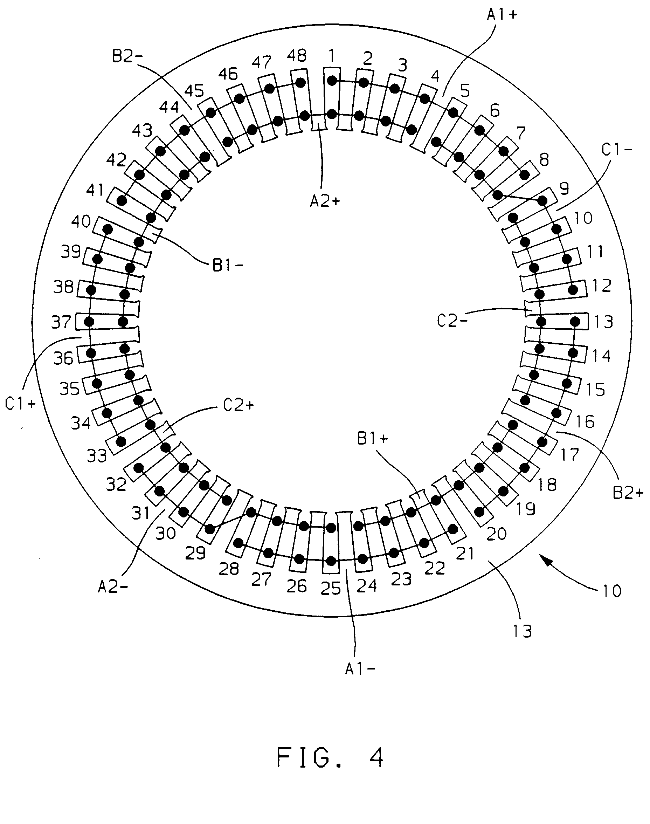

The kinked coil sets of the present invention are illustrated in Figures 3 and 4 which demonstrate the inventive winding pattern in three phase, eight pole and three phase, two pole machines respectively. In both figures, the stator has 48 slots labeled accordingly. The eight pole machine of Figure 3 has 24 coil sets in total; or, eight coil sets per each of the three phases. The two pole machine of Figure 4 has 6 coil sets in total; or, two coil sets per each of the three phases. The coil sets in both Figures are again designated by two character alphanumeric symbols in the same manner as those in Figure 1. The (+) and (-) designation that follows the coil set labels again designates the relative current direction in a respective coil set winding.

An exemplary flat coil set in the bottom layer positions of the stator slots of Figure 3 is labeled A1. Bottom layer slot positions in slots 1 and 2 are occupied by one side of the coil set A1 and bottom layer slot positions in slots 6 and 7 are occupied by the other side of the coil set A1. All coil sets with both sides thereof in the bottom layer slot positions (A1, C1, B3, A5, C5, B7) are, again, the first as a group to be wound and inserted whether manually or automatically. Twelve kinked coil sets are next inserted in two subgroups. The first subgroup of kinked coils wound and inserted comprises those coil sets that have one side thereof in the bottom layer position (C8, B2, A4, C4, B6 and A8). The second subgroup of kinked coils wound and inserted comprises the remaining kinked coils and those with one side thereof in the top layer position (B1, A3, C3, A7 and C7). Lastly, the flat coil sets with both coil sides thereof occupying the top layer positions of the stator slots (A2, C2, B4, A6, C6 and B6) are wound and inserted.

An exemplary flat coil set in the bottom layer positions of the stator slots of Figure 4 is labeled A1. Bottom layer slot positions in slots 1-8 are occupied by one side of the coil set A1 and bottom layer slot positions in slots 21-28 are occupied by the other side of the coil set A1. All coil sets with both sides thereof in the bottom layer slot positions (A1 and B2) are, again, the first as a group to be wound and inserted whether manually or automatically. Two kinked coil sets (C1 and A2) are next wound and inserted. In the present two pole machine, one of the two kinked coil sets (C1) has one side thereof in the bottom layer position, and the other of the two kinked coil set (A2) has one side thereof in the top layer position. Because of the lay of the previously inserted coils (A1 and B2) it is possible to wind and insert both of the kinked coil sets even though one dominates the bottom layer positions of the stator slots and the other dominates the top layer positions of the stator slots. Lastly, the flat coil sets with both coil sides thereof occupying the top layer positions of the stator slots (B1 and C2) are wound and inserted.

A general expression for the number of kinked coils has been developed as shown below:

$$K=2*\{int[(A-2*B)/B]+int[(C-A)/A]\} \qquad (1)$$

Where:

K = Kinked Coil Sets
A = Slots Spanned per Coil Set
B = Individual Coils per Coil Set
C = Slots in Stator (or Rotor)
int(X) = Integer Portion of X

For example, in the three phase, four pole machine illustrated in Figure 1, A is equal to 14 (see coil set A1 for example spans from slot 1 to slot 14); B is equal to 4 (see coil A1 for example occupies four slots per side, thus four coils); C equals 48. Reducing the expression yields a value for K of 6 which coincides with the number of kinked coils.

As a variation of the present invention, some of the kinked coil sets may have one side thereof fully occupying one layer position and the other side thereof fully occupying the other layer position such as is found in conventional full lap winding patterns. For example, it may be desirable to produce a four phase motor with eight poles off of the same stator configuration of 48 slots so as to avoid costly re-tooling to accommodate a different slot configuration. Such a configuration is known having coil sets with a coil span, or slot pitch, between the two sides of an individual coil equal to ten. The number of slots per pole equals 6. Therefore, the pitch of the winding is 5/3 (i.e. 10/6). This is known as an overcoiling arrangement. The number of individual coils in this embodiment is chosen to be three and results in a winding pattern suitable for full lapped application. However, the full lapped winding is undesirable inasmuch as it is a very manual labor intensive pattern not producible on high speed automated production equipment.

The present invention provides a winding pattern suitable for adaptation to automated winding equipment. Figure 5 shows such a winding pattern for a four phase, eight pole machine. Firstly, a first group of coil sets A1, B1, C1 and D1 are flat coil sets disposed in the bottom layer position of the stator slots. A second group of coil sets A2, B2, C2, D2, A3, B3, C3 and D3 have individual coils of one side of each coil set occupying either the top or the bottom layer positions of the stator slots with the remaining individual coils of the other side of each coil set either split between the bottom and top layer positions of the stator slots (A2, B2, C2, B3, C3, D3) or fully occupying the other layer position (D2, A3). Finally, a third group of coil sets A4, B4, C4 and D4 are flat coil sets disposed in the top layer position of the stator slots.

Where automated winding is employed, the first winding and insertion phase will be performed for coil sets A1, B1, C1 and D1 as all coils on both sides of these coil sets are drifted all the way back to the bottom slot position. Since in this overcoil configuration coil sets A1 and D1 overlap (but do not occupy the same slots), coil sets A1 and D1 may require end turns which bypass each other (longitudinally with respect to the stator) to prevent interferences thereat. While this is never optimal from a performance standpoint, the benefits of automated winding and fewer overall winding and insertion phases may outweigh the relatively small efficiency reductions occasioned thereby. Next, coil sets A2, B2, C2 and D2 are wound and inserted since all individual coils of one side thereof occupies the bottom slot positions which, of course, are to be first occupied. Since coil sets A2 and D2 overlap, their end turns may also need to bypass one another. Coil set A3, B3, C3 and D3 are next wound and inserted thus completing occupation of the bottom layer positions of the stator slots. Again, coil sets A3 and D3 are overlapping so bypassing of the end turns may be required. Finally, coil sets A4, B4, C4 and D4 (with similar end turn bypass provisions for A4 and D4) are wound and inserted thus completing the automated winding and insertion of the four phase, eight pole machine in as few as four winding and insertion phases.

## Claims

1. An alternating current machine winding for a polyphase, multi-pole, alternating current machine having a ferromagnetic structure including a plurality of slots having inner and outer layer positions adapted to support a two-layer alternating current winding, said winding comprising:

a plurality of coil sets (A-C), each coil set comprising a plurality of distributed individual coils having first and second sides (+,-) separated by a fixed slot pitch;

a first group of said plurality of coil sets (A1,B3,C1) characterized by all of the first and second sides (+, -) of the respective plurality of distributed individual coils occupying the inner layer positions of corresponding slots of the ferromagnetic structure;

a second group of said plurality of coil sets (A2,B4,C4) characterized by all of the first and second sides (+, -) of the respective plurality of distributed individual coils occupying the outer layer positions of corresponding slots of the ferromagnetic structure; and

a third group of said plurality of coil sets A3,A4,B1,B2,C2,C3) characterized by all of the first sides of the respective plurality of distributed individual coils occupying one of the outer and inner layer positions of corresponding slots of the ferromagnetic structure, a first portion of the second sides of the respective plurality of distributed individual coils occupying the other of the outer and inner layer positions of corresponding slots of the ferromagnetic structure, and a remaining portion of the second sides of the respective plurality of distributed individual coils occupying, in corresponding slots of the ferromagnetic structure, the same one of the outer and inner layer positions occupied by the first sides of the third group of said plurality of coil sets.

2. An alternating current machine winding as claimed in claim 1 wherein said first portion of the second sides of the respective plurality of distributed individual coils of some of said third group of said plurality of coil sets comprises all of said distributed individual coils on said second side, whereby some of said third group of said plurality of coil sets have one side of the respective plurality of distributed individual coils thereof occupying one of the outer and inner layer positions of corresponding slots of the ferromagnetic structure and the other side of the respective plurality of distributed individual coils thereof occupying the other of the outer and inner layer positions of corresponding slots of the ferromagnetic structure.

3. An alternating current machine winding as claimed in claim 1 wherein the ferromagnetic structure comprises a rotor.

4. An alternating current machine winding as claimed in claim 1 wherein the ferromagnetic structure comprises a stator.

5. An alternating current machine winding as claimed in claim 1 wherein each of the plurality of distributed individual coils comprises multiple turns.

6. An alternating current machine winding as claimed in claim 1 wherein said alternating current machine is a four pole, three phase machine having the winding on a stator thereof.

7. An alternating current machine winding for a polyphase, multi-pole, alternating current machine having a ferromagnetic structure including a plurality of slots having inner and outer layer positions adapted to support a two-layer alternating current winding, said winding comprising:

a plurality of coil sets (A-C), each coil set comprising a plurality of distributed individual coils having first and second sides (+, -) separated by a fixed slot pitch;

a first group of said plurality of coil sets (A1,B3,C1) characterized by all of the first and second sides (+, -) of the respective plurality of distributed individual coils occupying the inner layer positions of corresponding slots of the ferromagnetic structure;

a second group of said plurality of coil sets (A2,B4,C4) characterized by all of the first and second sides (+, -) of the respective plurality of distributed individual coils occupying the outer layer positions of corresponding slots of the ferromagnetic structure;

a third group of said plurality of coil sets (A3,B1,C3) characterized by all of the first sides (+, -) of the respective plurality of distributed individual coils occupying the outer layer positions of corresponding slots of the ferromagnetic structure, and the second sides of the plurality of distributed individual coils having a portion thereof occupying the outer layer positions of corresponding slots of the ferromagnetic structure and a remaining portion thereof occupying the inner layer positions of corresponding slots of the ferromagnetic structure; and

a fourth group of said plurality of coil sets (A4,B2,C2) characterized by all of the first sides (+, -) of the respective plurality of distributed individual coils occupying the inner layer positions of corresponding slots of the ferromagnetic structure, and the second sides of the plurality of distributed individual coils having a portion thereof occupying the outer layer positions of corresponding slots of the ferromagnetic structure and a remaining portion thereof occupying the inner layer positions of corresponding slots of the ferromagnetic structure.

FIG. 1

FIG. 2

FIG. 3

FIG. 4

FIG. 5

FIG. 6A

FIG. 6B

FIG. 6C

FIG. 6D

FIG. 7